# EUROPÄISCHE PATENTANMELDUNG

(11) **EP 0 638 523 A1**
(43) Veröffentlichungstag der Anmeldung: **15.02.1995**
(21) Anmeldenummer: 94112473.7
(22) Anmeldetag: 10.08.1994
(51) Int. Cl.: C02F 1/72, C02F 1/32, C02F 1/28

(54) **Vorrichtung zur Entkeimung von Wasser, insbesondere für ärztlichen und zahnärztlichen Bedarf**

(30) Priorität: 11.08.1993 DE 4326998
(71) Anmelder: Blümel, Brigitte, D-90513 Zirndorf (DE); Finger, Johannes Alfred, D-90513 Zirndorf (DE)
(72) Erfinder: Blümel, Brigitte, D-90513 Zirndorf (DE); Finger, Johannes Alfred, D-90513 Zirndorf (DE)
(74) Vertreter: Brose, Manfred, Dr.

(57) **Zusammenfassung**

Eine Vorrichtung zur Entkeimung von wasser im Durchflußverfahren, insbesondere für ärztlichen oder zahnärztlichen Bedarf, umfaßt eine Anlage zur Zufuhr von Wasserstoffperoxid in das Wasser und einer nachfolgenden UV-Einheit. Die UV-Einheit besteht aus einer einzigen Quecksilber-Niederdrucklampe. Hierdurch ist es möglich, die Vorrichtung kostengünstig herzustellen und räumlich klein auszuführen, sodaß eine Integration in die ärztlichen Behandlungseinheiten leicht möglich ist.

## Beschreibung

Die Erfindung betrifft eine Vorrichtung zur Entkeimung von Wasser im Durchlflußverfahren, insbesondere für ärztliche oder zahnärztlichen Bedarf.

Das Keimfreimachen von wasser mittels UV-Strahlung ist ein bekanntes und in der Praxis gängiges Verfahren. Es dient dazu, mikrobiell oder mikrobiologisch belastete Flüssigkeiten mit Hilfe von photochemischer Abbaureaktionen zu behandeln. durch den Einfluß des UV-Lichts werden hochreaktive Radikale gebildet, welche die jeweiligen Schadstoffe angreifen und so bestimmte Abbauraten erreichen.

So existiert bereits eine Vorrichtung, die vorzugsweise zum behandeln von Wasser aus Warmwasseranlagen, z.B. Duschanlagen, eingesetzt werden kann. Eine solche Vorrichtung ist aus der DE 93 03 682 U1 bekannt. Sie dient insbesondere dazu, Wasser zu behandeln, die einen erreger der Gattung Legionella, wie Legionella pneumophila, enthalten. Legionella pneumophila ist bekannt als der erreger der sogenannten Legionärskankheit.

Aus der DE 38 43 679 A1 (Gimat) ist ein Verfahren zur Wasseraufbereitung bekannt, bei dem durch Behandeln des gegebenenfalls mechanisch vorgereinigten Wassers mit einem Oxidationsmittel und einer UV-Einheit Wasser erzeugt wird, das frei von Bakterien und oxidierbaren Stoffen ist. Bei diesem Verfahren wird das Wasser nach dosierter Zugabe von wasserstoffperoxid mit zwei UV-Lampen bestrahlt, nämlich einer Quecksilber-Niederdrucklampe im Wellenlängenbereich von 250 bis 260 mm und mindestens einer Quecksilber-Hochdrucklampe von 200 bis 600 mm. Der Anlage zur Durchführung dieses Verfahrens haften jedoch die Nachteile an, daß durch den Einsatz von zwei UV-Lampen die gesamte Anlage sehr aufwendig und teuer ist und auch einen beträchtlichen raumbedarf hat. Die Problematik der Wasserentkeimung spielt besonders im Bereich der Zahnbehandlung und der Kieferchirurgie eine zunehmende Rolle. Um einer möglichen Keimübertragung durch Kühl- und Mundwasser vorzubeugen, ist eine Entkeimung des verwendeten Wassers angebracht.
der Erfindung liegt daher die Aufgabe zugrunde, eine Vorrichtung zur Entkeimung von Wasser im Durchflußverfahren, insbesondere für ärztlichen oder zahnärztlichen Bedarf zu schaffen, die preisgünstig und von geringem Raumbedarf ist.

Diese Aufgabe wird nach der erfindung dadurch gelöst, daß die UV-Einheit aus einer Quecksilber-Niederdrucklampe besteht. Die Überprüfung des erzeugten Wassers hat überraschenderweise ergeben, daß das Wasser keimfrei ist und die gestellte Aufgabe daher mit einer UV-Lampe gelöst werden kann. Die gesamte Vorrichtung kann in kompakter, geschlossener Form an einer Trinkwasserleitung mittels eines Bypasses installiert werden. Der mit der Erfindung erzielte Vorteil besteht in erster Linie darin, daß für den Bereich Zahnmedizin, Oralchirurgie und Kieferorthopädie eine Vorrichtung zur Verfügung steht, mit deren Hilfe das zur Behandlung verwendete Wasser, nämlich Kühl- und Mundspülwasser in zahnärztlichen Geräten, wie Wasserspritze, Mehrfunktionsspritze Winkelstück, Turbine, Trinkwasserspender, Zahnsteininstrumente, entkeimt und somit das mit einer Kontamination verbundene gesundheitliche Risiko für die Patienten minimiert werden kann.

In einer ersten Fortbildung besteht die UV-Einheit aus einem Quarzglasbehälter, in den die Quecksilber-Niederdruck-Lampe von einer Stirnseite her eingesetzt ist und wobei der Wasserzu- und Ablauf versetzt am Quarzglasbehälter angeordnet ist.

In einer zweiten Fortbildung besteht die Anlage zur Zufuhr von Wasserstoffperoxid aus einem Wassermengenzähler, der eine Dosierpumpe steuert und einem Vorratsbehälter für das Wasserstoffperoxid.

Gegebenenfalls kann noch ein Aktivkohlefilter vorgeschaltet werden.

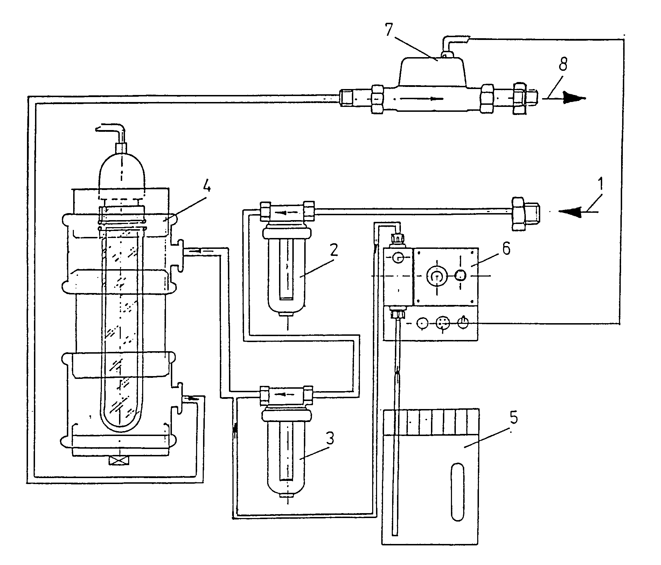

Ein Ausführungsbeispiel der Erfindung ist in der Zeichnung dargestellt und wird im folgenden näher beschrieben.

Das zu behandelnde Wasser gelangt über den Rohwassereinlauf 1 zunächst in einen physikalischen Vorfilter 2 zur Entfernung eventuell vorhandener physikalischer Verunreinungen. Der Filter besteht aus einem Kunststoffgehäuse mit einem darin befindlichen Standardfilterelement. Als Filtermaterial wird Polypropylen verwendet, welches es ermöglicht, Verschmutzungen innerhalb der Filtermatrix zurückzuhalten.

Nach dem Vorfiltern passiert das Wasser einen Aktivkohlefilter 3. Mit dem ebenfalls in einem Kunststoffgehäuse untergebrachten Filtersubstrat können auch feinste Feststoffpartikel abgeschieden werden. Außerdem werden durch die Aktivkohle organische Moleküle, wie beispielweise Pestizidrückstände adsorbiert.

Beide Filtergehäuse sind mit Entlüftungsventilen als überdruckschutz versehen.

Vor dem Eintritt des Wassers in die UV-Einheit 4 wird dem Wasser eine dem Gesamtdurchfluß angepaßte Menge Wasserstoffperoxid zudosiert. Die Konzentration des Wasserstoffperoxids ist so zu wählen, daß, eventuell unter Beachtung gesetzlicher Vorschriften, der bestmögliche Wirkungsgrad hinsichtlich der Keimtötung erzielt wird.

Das Wasserstoffperoxid befindet sich in einem chemikalienbeständigen Vorratsbehälter 5. Mittels der Dosierpumpe 6 wird die vorgesehene Menge Wasserstoffperoxid in den Wasserstrom eingespeist.

Die Dosierpumpe 6 ist mit einem Wassermengenzähler 7 gekoppelt. Entsprechend der vom Wasserzähler registrierten Durchflußmenge dosiert die Pumpe 6 die festgelegte Menge Wasserstoffperoxid zu. Auf diese Weise wird die im Reinwasser enthaltene Konzentration an Wasserstoffperoxid ständig konstant gehalten.

Im letzten Schritt gelangt das Wasser in die UV-Einheit 4, wo aufgrund des Prinzips der Entkeimung durch ultraviolette Strahlen alle Bakterien, Keime und Viren abgetötet werden. Die UV-Einheit 4 besteht aus einem zylindrischen Behälter mit je einem versetzten Anschluß für den Wasserzulauf und -ablauf. Im Behälter befindet sich ein UV-Quecksilber-Niederdruckstrahler, der mit einem aus Quarzglas bestehenden Mantel umgeben ist. Während seines Weges vom Zu- zum Ablauf wird das Wasser der von der UV-Lampe emittierten Strahlung ausgesetzt und auf diese Weise keimfrei gemacht.

Nach Durchströmen des wassermengenzählers 7 kann das mit Wasserstoffperoxid angereicherte und keimfreie Wasser über den Reinwasserauslauf 8 die Vorrichtung verlassen und der Behandlungseinheit des Arztes oder Zahnarztes zugeführt werden.

## Patentansprüche

1. Vorrichtung zur Entkeimung von wasser im Durchflußverfahren, insbesondere für ärztlichen oder zahnärztlichen Bedarf, mit einer Anlage zur Zufuhr von Wasserstoffperoxid in das Wasser und einer nachfolgenden UV-Einheit, dadurch gekennzeichnet, daß die UV-Einheit (4) aus einer Quecksilber-Niederdrucklampe besteht.

2. Vorrichtung nach Anspruch 1, gekennzeichnet durch einen Quarzglasbehälter, in den die UV-Lampe von einer Stirnseite her eingesetzt ist und wobei der Wasserzu- und Abfluß versetzt an der UV-einheit (4) angeordnet ist.

3. vorrichtung nach Anspruch 1 oder 2, dadurch gekennzeichnet, daß die Anlage zur Zufuhr von Wasserstoffperoxid aus einem Wassermengenzähler (7), der eine Dosierpumpe (6) steuert, und einem Vorratsbehälter (5) für Wasserstoffperoxid besteht.

4. Vorrichtung nach einem der Ansprüche 1 bis 3 , gekennzeichnet durch einen vorgeschalteten Aktivkohlefilter (3).
